# EUROPÄISCHE PATENTSCHRIFT

(11) **EP 3 141 400 B1**
(45) Veröffentlichungstag und Bekanntmachung des Hinweises auf die Patenterteilung: **01.11.2017**
(21) Anmeldenummer: 15184390.1
(22) Anmeldetag: 09.09.2015
(51) Int. Cl.: B44C 1/24, B32B 38/06, B44C 5/04

(54) **VERFAHREN ZUR HERSTELLUNG VERSCHIEDENER LAMINATE MIT EINEM PRESSBLECH**
METHOD FOR THE PREPARATION OF DIFFERENT LAMINATES WITH ONE PRESS PLATE
PROCEDE DE FABRICATION DE PLUSIEURS STRATIFIES DIFFERENTS A L'AIDE D'UNE TOLE DE PRESSE

(43) Veröffentlichungstag der Anmeldung: 15.03.2017
(73) Patentinhaber: Interprint GmbH, 59759 Arnsberg (DE)
(72) Erfinder: Dröge, Burkhard, 57392 Schmallenberg (DE); Figliuzzi, Salvatore, 47877 Willich (DE)
(74) Vertreter: Basfeld, Rainer

(56) Entgegenhaltungen:
- EP-A1- 1 953 005
- EP-A2- 2 036 741
- WO-A2-2011/039665

## Beschreibung

Die vorliegende Erfindung betrifft ein Verfahren zur Herstellung verschiedener Laminate mit einem Pressblech gemäß dem Oberbegriff des Anspruchs 1 oder 2.

In der Fußboden- und Möbelindustrie werden Spezialpapiere bedruckt, wobei das Druckbild einem Holz, einem Stein oder einem anderen Element gleicht. Ein derartiges, mit einem Dekor bedrucktes Spezialpapier wird Dekorpapier genannt. Nach dem Drucken werden die Dekorpapiere in einem Harz imprägniert und diese Imprägnate mit einem Pressblech in einer Presse auf einem Werkstoff aufgetragen. Dabei wird die Struktur des Pressblechs auf das Pressgut übertragen, das auch Laminat genannt wird. Dieser Prozess ist hinreichend beschrieben.

Bei einer besonders natürlichen Anmutung erkennt der Laie den Unterschied zwischen einem so hergestellten Laminat und einem Holz oder Stein nicht, wenn die Struktur des Pressblechs zu dem Dekorpapier passt.

Die Herstellung eines Pressblechs ist mit hohen Kosten verbunden. Daher strebt man an, ein Pressblech für verschiedene Dekorpapiere einsetzen zu können. Dies wird beispielsweise dadurch versucht, dass eine Pressstruktur eingesetzt wird, die nicht zu dem Dekorpapier passt. Es ist dann sofort ersichtlich, dass es sich nicht um ein natürliches Material handelt.

Die EP 1 953 005 A1 beschreibt, wie durch Bildverarbeitungstechniken verschiedene Dekore passend zu einer Pressstruktur angepasst werden können. Dabei können auch unterschiedliche Holzarten eingescannt und ihre Bildstruktur an die Pressstruktur angepasst werden. Letztendlich kann ein Pressblech dann für mehrere Dekore verwendet werden.

Es zeigt sich jedoch in der Praxis, dass die Bildverarbeitung sehr aufwändig ist. Zudem wirken die derart bearbeiteten Dekore von Hölzern oft nicht mehr natürlich, weil sich beispielsweise die Verteilung und Ausprägung von Ästen und Poren einer Eiche von der einer Kirsche sehr unterscheiden können.

Hier setzt die vorliegende Erfindung an und macht es sich zur Aufgabe ein Verfahren vorzuschlagen, mit dem verschiedene Laminate unter Verwendung lediglich eines Pressbleches hergestellt werden können, wobei das Dekorpapier in bestmöglicher Weise zu dem Pressblech passen soll, insbesondere um eine besonders naturgetreue Anmutung des Laminats gewährleisten zu können.

Erfindungsgemäß wird diese Aufgabe durch ein Verfahren gemäß Anspruch 1 gelöst. Durch die angegebenen Verfahrensschritte, kann ein Verfahren zur Herstellung verschiedener Laminate unter Verwendung lediglich eines Pressblechs vorgeschlagen werden, bei dem das Dekorpapier in höchstem Maße zu der durch das Pressblech erzeugten Oberflächenstruktur des Laminats passt.

Die Herstellung erfordert zunächst das Scannen einer Vorlage zur Erzeugung eines ersten Bilddatensatzes und eines Reliefdatensatzes. Bei der Vorlage kann es sich beispielsweise um ein Stück Holz oder Stein handeln. Mit dem ersten Bilddatensatz wird entsprechend die zweidimensionale Erscheinung der Oberfläche der Vorlage digital eingefangen. Es könnte auch davon gesprochen werden, dass mit einer hochauflösenden Digitalkamera ein Bild von der Oberfläche der Vorlage gemacht wird.

Der Reliefdatensatz kann, beispielsweise mittels Schattenwurf und entsprechender Algorithmen, aus dem Bilddatensatz herausgerechnet werden. Alternativ kann der Reliefdatensatz aber auch in einem separaten Scan erfasst werden. Mit dem Reliefdatensatz wird entsprechend die dreidimensionale Erscheinung der Oberfläche der Vorlage digital eingefangen. Es könnte auch davon gesprochen werden, dass hier die Höhenlinien der Vorlage digital erfasst werden. Der Reliefdatensatz wird beispielsweise als Bitmap-File abgelegt.

In einem nächsten Verfahrensschritt wird eine Anzahl von n Schichten von der Vorlage abgetragen. Es könnte auch davon gesprochen werden, dass eine Anzahl einzelner Furnierblätter von der Vorlage abgetragen werden. Der Zähler n steht hier für eine Anzahl.

Anschließend wird jede Schicht mit einer unterschiedlichen Bearbeitungsmethode bearbeitet und jede Schicht zur Erzeugung eines Bilddatensatzes gescannt. Bis hierhin wurden, zusammen mit dem ersten Bilddatensatz der unbearbeiteten Vorlage n+1 Bilddatensätze und entsprechend ein Reliefdatensatz der unbearbeiteten Vorlage erzeugt. Die Bilddatensätze werden beispielsweise als Bitmap-File abgelegt.

Mit diesen Datensätzen lassen sich entsprechend n+1 verschiedene Dekorpapiere erzeugen, wobei das Pressblech aus dem einen Reliefdatensatz erzeugt werden kann. Die Bilddatensätze bilden beispielsweise eine ursprüngliche Vorlage, eine geschliffene Schicht, eine geölte Schicht und eine gekalkte Schicht ab. Die vorgenannten Bilddatensätze der Schichten, sprich Bilder der jeweiligen Oberfläche der bearbeiteten Schicht, passen jedoch perfekt oder zumindest nahezu perfekt zu dem Reliefdatensatz, sprich dem Relief der ursprünglichen Vorlage.

Nunmehr können n+1 verschiedene Dekorpapiere erzeugt werden, indem jeweils ein Bilddatensatz zum Druck eines Dekorpapiers verwendet wird.

Hieraus wiederum können n+1 verschiedenen Laminate aus den n+1 verschiedenen Dekorpapieren durch Verpressen des jeweiligen Dekorpapiers mit einer Grundplatte mittels des Pressblechs hergestellt werden. Die Dekorpapiere liegen für diesen Vorgang vorzugsweise als harzgetränkte Dekorpapiere vor, die auch als Imprägnat angesprochen werden können.

Der sich hier ergebende Vorteil liegt auf der Hand. Die Dekorpapiere bzw. Laminate sind hinsichtlich des Dekors entsprechend der Bearbeitungsmethode unterschiedlich. Das Pressblech passt jedoch auf jedes der Dekore und verleiht entsprechend jedem Dekor eine hohe Authentizität.

Mittels des oben skizzierten Verfahrens ist es möglich, verschiedene Varianten von Laminaten herzustellen, die sich hinsichtlich ihres Dekors von dem ursprünglichen Dekor aus der ursprünglichen Vorlage durch die vorgenommenen unterschiedlichen Bearbeitungsmethoden an den Schichten unterscheiden, wobei jedoch sichergestellt ist, dass das Pressblech in höchstmöglichem Maße zu allen Varianten passt, insbesondere was die nachgebildete Ausprägung von Ästen oder Poren anbelangt.

Die Aufgabe wird ebenso durch ein Verfahren mit den Merkmalen des Anspruchs 2 gelöst. Der Anspruch 2 betrifft ein alternatives Verfahren, bei dem der Vorlage nicht einzelne Schichten entnommen werden, sondern bei dem die Vorlage nach jedem Scannen einer Bearbeitungsmethode unterzogen wird. Aber auch hier wird zunächst eine Vorlage zur Erzeugung eines ersten Bilddatensatzes und eines Reliefdatensatzes gescannt.

In einem nachfolgenden Verfahrensschritt wird die Vorlage mit unterschiedlichen Bearbeitungsmethoden bearbeitet und jeweils nach dem Bearbeiten gescannt. Hierdurch werden entsprechend n Bilddatensätze erzeugt.

In einem nachfolgenden Verfahrensschritt können entsprechend n+1 verschiedene Dekorpapiere aus dem ersten Bilddatensatz und den n Bilddatensätzen gedruckt werden.

Ferner kann ein Pressblech aus dem Reliefdatensatz erzeugt werden.

Letztendlich können mit den n+1 verschiedenen Dekorpapieren und dem einen Pressblech n+1 verschiedene Laminate durch Verpressen des jeweiligen Dekorpapiers bzw. Imprägnats mit einer Grundplatte hergestellt werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung des Verfahrens kann vorgesehen sein, dass es sich bei der Vorlage um ein Holz oder einen Stein handelt. Die vorgenannten Vorlagen sind insbesondere als Böden oder im Falle des Holzes auch als Möbelwerkstoff sehr gebräuchlich. Insofern ist es besonders erstrebenswert, hier ein möglichst authentisches Laminat herstellen zu können, welcher hinsichtlich seiner Oberfläche möglichst nahe an das Original heranreicht.

In einer weiteren vorteilhaften Ausgestaltung des Verfahrens kann vorgesehen sein, dass als Bearbeitungsmethode Schleifen, Pore ausbürsten, maschinelles Strukturieren, Sandstrahlen, Beizen, Räuchern, Kälken, Lackieren und/oder Ölen in Frage kommt. Die vorgenannten Bearbeitungsmethoden stellen eine Auswahl an Bearbeitungsmethoden dar, die auf die Schichten bzw. die Vorlage selbst angewendet werden können.

In einer vorteilhaften Ausgestaltung des Verfahrens kann vorgesehen sein, dass die Dekorpapiere in verschiedenen Färbungen koloriert werden. Hierdurch kann nochmals individuell auf die Bedürfnisse des Kunden eingegangen werden und entsprechend unterschiedlich eingefärbte Dekorpapiere hergestellt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematische Darstellung eines erfindungsgemäßen Herstellungsverfahrens;
- Fig. 2: eine schematische Darstellung eines erfindungsgemäßen Herstellungsverfahrens.

Folgende Bezugszeichen werden in den Abbildungen verwendet:
- V: Vorlage
- Sₙ: Schicht
- Bₙ: Bilddatensatz
- R: Reliefdatensatz
- P: Pressblech
- R: Presse
- G: Grundplatte
- Dₙ: Dekorpapier
- Lₙ: Laminat
- T: Druckmaschine

Zunächst soll auf den grundsätzlichen Aufbau eines mittels des erfindungsgemäßen Verfahrens herstellbaren Laminats eingegangen werden.

Ein Laminat L umfasst im Wesentlichen eine Grundplatte G und ein auf die Grundplatte G aufgebrachtes harzgetränktes Dekorpapier D. Das Laminat L kann weitere Schichten, beispielsweise einen Gegenzug, eine Beschichtung, etc. umfassen.

Bei der Grundplatte G kann es sich beispielsweise um eine MDF Platte oder einen ähnlichen Werkstoff handeln.

Bei dem Dekorpapier D handelt es sich im Wesentlichen um ein mit einem Dekor bedrucktes Spezialpapier. Für die Herstellung des Dekors wird das zweidimensionale Bild, vorzugsweise in digitaler Form, der Oberfläche einer Vorlage benötigt. Heutzutage wird die Oberfläche der Vorlage mit einer hochauflösenden Digitalkamera photographiert. Man spricht in diesem Zusammenhang auch von einem "scan", welches nachfolgend als Synonym für eine digitale Erfassung der Oberfläche benutzt werden soll. Das digitale Ergebnis des scans wird in einem Bilddatensatz abgespeichert. Als Vorlage für das Dekor kommen grundsätzlich natürliche Vorlagen, wie beispielsweise Hölzer oder Steine, in Frage. Denkbar sind selbstverständlich auch anderer Motive.

Das Dekorpapier zeichnet sich insbesondere durch seine gute Harzaufnahmefähigkeit aus. Das harzgetränkte Dekorpapier D, welches auch als Imprägnat bezeichnet wird, wird mittels einer Presse P auf die Grundplatte G aufgepresst. Dabei wird das Harz erwärmt und nach dem Erkalten sind Grundplatte G und Dekorpapier D unlösbar miteinander verbunden.

Während des Verpressens kommt ein sogenanntes Pressblech P zum Einsatz. Das Pressblech P weist auf der dem Dekorpapier D zugewandten Seite ein Relief auf, welches insbesondere in die Oberfläche des Dekorpapiers D eingeprägt wird. Das Pressblech P gibt dem Laminat L damit die Oberflächenstruktur, die im Idealfalle zu dem aufgedruckten Dekor passt, beispielsweise entsprechende Strukturen an denjenigen Stellen, an denen das Dekor ein Astloch etc. abbildet. Das Pressblech P kann auf verschiedene Arten hergestellt werden, beispielsweise mittels Lasergravur, chemischer oder mechanischer Bearbeitungsverfahren. Zur Herstellung des Pressbleches P wird demnach die Struktur der Oberfläche der Vorlage benötigt, vorzugsweise in digitaler Form eines Reliefdatensatzes. Mit dem Reliefdatensatz wird entsprechend die dreidimensionale Erscheinung der Oberfläche der Vorlage digital eingefangen. Es könnte auch davon gesprochen werden, dass hier die Höhenlinien der Vorlage digital erfasst werden. Der Reliefdatensatz kann, beispielsweise mittels Schattenwurf und entsprechenden Algorithmen aus dem Bilddatensatz herausgerechnet werden. Alternativ kann der Reliefdatensatz aber auch in einem separaten Scan erfasst werden.

Ausgangspunkt der erzeugten digitalen Informationen ist demnach stets die angesprochene Vorlage, beispielsweise in Form eines Holzes oder Steins. Diese Vorlage wird gescannt bzw. digital photographiert und es werden die oben bereits angesprochenen digitalen Datensätze, insbesondere per Bildverarbeitungssoftware und geeigneten Computern, erzeugt.

Ziel des näher zu beschreibenden erfindungsgemäßen Verfahrens ist es nunmehr eine Vielzahl von Varianten eines Laminats unter Verwendung lediglich eines Pressbleches herzustellen, wobei das bedruckte Dekorpapier in größtmöglicher Weise zu dem Pressblech passen soll, insbesondere um eine besonders naturgetreue Anmutung des Laminats zu gewährleisten.

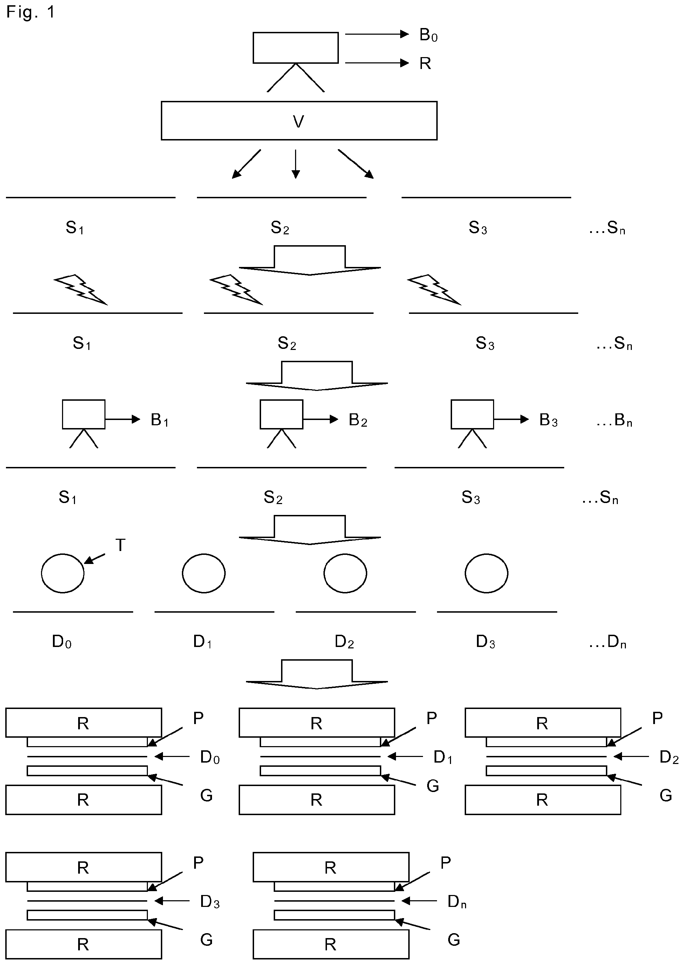

Hierzu wird erfindungsgemäß ein Verfahren zur Herstellung verschiedener Laminate unter Verwendung lediglich eines Pressblechs vorgeschlagen. Das Verfahren ist prinzipiell in Fig. 1 dargestellt, wobei durch die Blitzsymbole eine Bearbeitung symbolisiert werden soll.

Die Herstellung eines Laminats mit dem erfindungsgemäß vorgeschlagenen Verfahren erfordert zunächst das Scannen einer Vorlage V zur Erzeugung eines ersten Bilddatensatzes B₀ und eines Reliefdatensatzes R. Bei der Vorlage V kann es sich beispielsweise um ein Stück Holz oder Stein handeln. Die Vorlage V kann bereits entsprechend bearbeitet sein, sprich es muss nicht zwangsläufig ein rohes Stück Holz oder Stein zum Einsatz kommen.

Mit dem ersten Bilddatensatz B₀ wird entsprechend das Bild der Oberfläche der Vorlage digital eingefangen.

In einem nächsten Verfahrensschritt werden n Schichten S₁ bis Sₙ von der Vorlage V abgetragen. Es könnte auch davon gesprochen werden, dass n einzelne Furnierblätter von der Vorlage abgetragen werden.

Anschließend wird jede Schicht S₁ bis Sₙ mit jeweils einer unterschiedlichen Bearbeitungsmethode bzw. Bearbeitungsmethoden bearbeitet und jede Schicht S₁ bis Sₙ zur Erzeugung von n Bilddatensätzen B₁ bis Bₙ gescannt. Bis hierhin wurden, zusammen mit dem ersten Bilddatensatz der unbearbeiteten Vorlage n+1 Bilddatensätze und entsprechend ein Reliefdatensatz R der unbearbeiteten Vorlage erzeugt.

Mit diesen Bilddatensätzen B₁ bis Bₙ und dem ersten Bilddatensatz B₀ lassen sich entsprechend verschiedene Dekorpapiere D₀ bis Dₙ erzeugen, wobei das Pressblech P aus dem einen Reliefdatensatz R erzeugt werden kann. Die Bilddatensätze bilden beispielsweise die ursprüngliche Vorlage, eine geschliffene Schicht, eine geölte Schicht und eine gekalkte Schicht ab. Die vorgenannten Bilddatensätze B₁ bis Bₙ passen jedoch perfekt oder zumindest nahezu perfekt zu dem Reliefdatensatz R der ursprünglichen Vorlage, obgleich sie eigentlich durch die Bearbeitung leicht anders aussehen.

Aus den Bilddatensätzen B₀ bis Bₙ können entsprechend verschiedene Dekorpapiere D₀ bis Dₙ erzeugt werden, indem jeweils ein Bilddatensatz zum Druck eines Dekorpapiers verwendet wird. Als Druckverfahren kommt beispielsweise Tiefdruck oder Digitaldruck in Frage.

Hieraus wiederum können verschiedenen Laminate Lo bis Lₙ aus den verschiedenen Dekorpapieren D₀ bis Dₙ durch Verpressen des jeweiligen harzgetränkten Dekorpapiers mit einer Grundplatte mittels des Pressblechs P hergestellt werden.

Der sich hier ergebende Vorteil liegt auf der Hand. Die Laminate sind hinsichtlich des Dekors entsprechend der Bearbeitungsmethode unterschiedlich. Das Pressblech passt jedoch auf jedes der Dekore und verleiht entsprechend jedem Dekor eine hohe Authentizität.

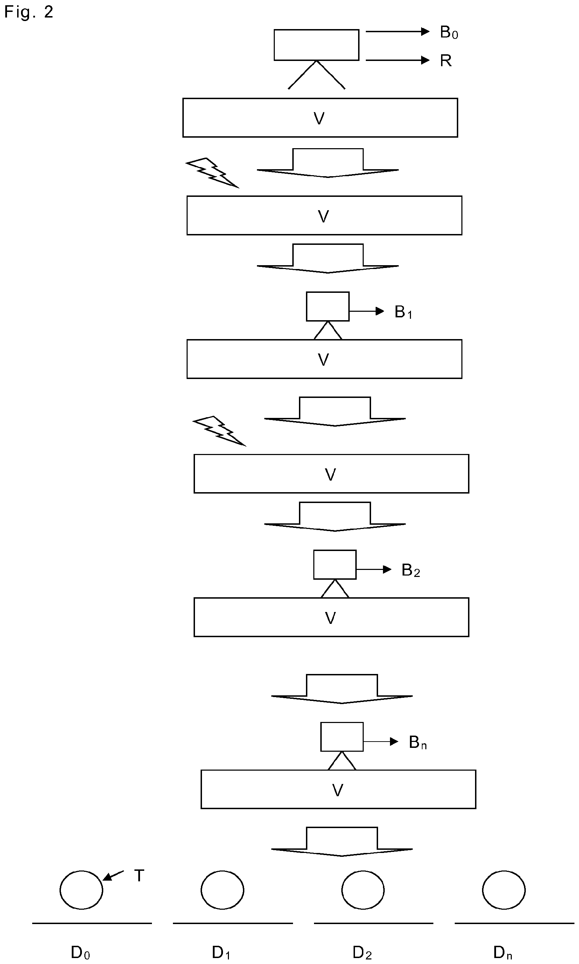

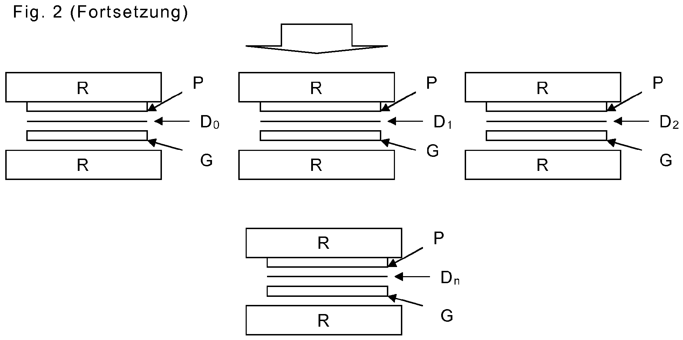

Alternativ kann das Ergebnis auch mit einer Vorlage V erzielt werden, bei der keine Schichten von der Vorlage V abgetragen werden, sondern die Vorlage V als solches verschiedenen Bearbeitungsmethoden unterzogen wird. Das Verfahren ist prinzipiell in Fig. 2 dargestellt, wobei durch die Blitzsymbole eine Bearbeitung symbolisiert werden soll.

Der erste Verfahrensschritt ist hier identisch. Eine Vorlage V wird zur Erzeugung eines ersten Bilddatensatzes B₀ und eines Reliefdatensatzes R gescannt.

Anschließend wird die Vorlage V bearbeitet und entsprechend gescannt. Dies kann grundsätzlich beliebig oft wiederholt werden, wobei sich die Bearbeitungsmethode unterscheiden sollte. Entsprechend der Wiederholungen können entsprechend viele Bilddatensätze B₁ bis Bₙ erzeugt werden.

Mit dem ersten Bilddatensatz B₀ und den jeweils generierten Bilddatensätzen B₁ bis Bₙ können entsprechend viele Varianten an Dekorpapieren D₀ bis Dₙ gedruckt werden, beispielsweise in einer Druckmaschine T. Als Druckverfahren kommt beispielsweise Tiefdruck oder Digitaldruck in Frage.

Aus dem einen Reliefdatensatz R kann entsprechend das Pressblech hergestellt werden.

Hieraus wiederum können verschiedenen Laminate Lo bis Lₙ aus den verschiedenen Dekorpapieren D₀ bis Dₙ durch Verpressen des jeweiligen harzgetränkten Dekorpapiers mit einer Grundplatte mittels des Pressblechs P hergestellt werden.

Als Behandlungsmethoden von Vorlage bzw. Schichten kommen beispielsweise in Frage:
- Schleifen
- Pore ausbürsten
- maschinelles Strukturieren
- Sandstrahlen
- Beizen
- Räuchern
- Kälken
- Lackieren
- Ölen

In einem konkreten Beispiel eines Stückes Holz als Vorlage kann insbesondere wie folgt vorgegangen werden.

Die Vorlage, hier ein Stück Holz, wird zunächst in einem grob geschnittenen Zustand gescannt. Aus diesem Scan werden sowohl der erste Bilddatensatz B₀, als auch der Reliefdatensatz R für das Pressblech P errechnet.

Anschließend wird beispielsweise etwas auf die Vorlage V aufgetragen (z.B. Öl) und die Vorlage V dann gescannt. Es entsteht der Bilddatensatz B₁. Dann wird eine nächste Oberflächenbehandlung mit einem anderen Mittel (z. B. Kalk) vorgenommen und erneut gescannt. Es entsteht der Bilddatensatz B₂. Dann kann die Vorlage V anschließend mechanisch bearbeitet werden (z. B. Hobeln oder Sandstrahlen), um eine weitere Oberfläche zu schaffen. Es wird gescannt und der Bilddatensatz B₃ generiert. Es kann anschließend wieder eine diesmal andere Oberflächenbehandlung durchgeführt und eine weitere Oberfläche erstellt werden. Dies kann so oft wiederholt werden, wie Ideen generiert werden. Es sind natürlich alle denkbaren Reihenfolgen von Auftragen und Abtragen möglich. Im Wesentlichen wird hier aber ein und dieselbe Vorlage V immer wieder benutzt, jeweils mit einer durch die Oberflächenbehandlung bedingten unterschiedlichen Oberflächenerscheinung. Im Ergebnis erhält man Bilddaten B₀ (unbearbeitete Vorlage), B₁ (geölte Vorlage), B₂ (gekalkte Vorlage), B₃ (gehobelte oder sandgestrahlte Vorlage), usw. Mit diesen Bilddaten können entsprechend die Dekorpapiere D₀ bis D₃ gedruckt werden, woraus dann wiederum mit dem aus den Reliefdaten R hergestellten Pressblech, die Laminate Lo bis L₃ erzeugt werden können.

Eine weitere Möglichkeit besteht, wie bereits oben dargelegt, darin, dünne Schichten S₁ bis Sₙ von der Vorlage V abzunehmen, sprich Furnierblätter zu erzeugen, die sich auf Grund der geringen Dicke hinsichtlich ihrer Struktur nicht wesentlich unterscheiden, insbesondere wenn sie von einem Stamm geschält wurden. Diese Schichten können dann auch unterschiedlich bearbeitet werden, beispielsweise die erste Schicht S₁ wird geölt, die zweite Schicht S₂ wird gekalkt, die dritte Schicht S₃ wird gehobelt oder sandgestrahlt. Jede bearbeitete Schicht S₁ bis S₃ wird entsprechend gescannt und es werden die Bilddaten B₁ bis B₃ erzeugt. Im Endergebnis erhält man ebenfalls Bilddaten B₀ und Reliefdaten R von der ursprünglichen Vorlage und jeweils Bilddatensätze B₁ bis B₃ je bearbeiteter und gescannter Schicht. Aus den Bilddatensätzen B₀ bis B₃ werden die Dekorpapiere D₀ bis D₃ gedruckt, beispielsweise mit einer Druckmaschine T, die dann mit Grundplatten und dem per Reliefdatensatz R hergestellten Pressblech zu den Laminaten L₀ bis L₃ verpresst werden.

Insofern sind mindestens zwei Wege möglich. Einerseits wird die identische Vorlage mehrfach bearbeitet, andererseits werden (nahezu) identische Vorlagen bearbeitet.

## Patentansprüche

1. Verfahren zur Herstellung verschiedener Laminate (L₀ bis Lₙ) mit einem Pressblech (P), wobei jedes Laminat eine Grundplatte (G) und ein Dekorpapier (Dₙ) umfasst, **gekennzeichnet durch** nachfolgende Verfahrensschritte:
- Scannen einer Vorlage (V) zur Erzeugung eines ersten Bilddatensatzes (B₀) und eines Reliefdatensatzes (R);
- Abtragen von n Schichten (S₁ bis Sₙ) von der Vorlage (V);
- Bearbeiten jeder Schicht (S₁ bis Sₙ) mit unterschiedlichen Bearbeitungsmethoden und Scannen jeder unterschiedlich bearbeiteten Schicht zur Erzeugung von n Bilddatensätzen (B₁ bis Bₙ);
- Erzeugen von verschiedenen Dekorpapieren (Do bis Dₙ) aus dem ersten Bilddatensatz (B₀) und den n Bilddatensätzen (B₁ bis Bₙ);
- Erzeugen des Pressblechs (P) aus dem Reliefdatensatz (R);
- Erzeugen von verschiedenen Laminaten (L₀ bis Lₙ) aus den verschiedenen Dekorpapieren (Do bis Dₙ) durch Verpressen des jeweiligen Dekorpapiers mit einer Grundplatte (G) mittels des Pressblechs (P).

2. Verfahren zur Herstellung verschiedener Laminate (L₀ bis Lₙ) mit einem Pressblech (P), wobei jedes Laminat eine Grundplatte (G) und ein Dekorpapier (Dₙ) umfasst, **gekennzeichnet durch** nachfolgende Verfahrensschritte:
- Scannen einer Vorlage (V) zur Erzeugung eines ersten Bilddatensatzes (B₀) und eines Reliefdatensatzes (R);
- n mal Bearbeiten und Scannen der Vorlage mit jeweils unterschiedlichen Bearbeitungsmethoden zur Erzeugung von n Bilddatensätzen (B₁ bis Bₙ);
- Erzeugen von verschiedenen Dekorpapieren (Do bis Dₙ) aus dem ersten Bilddatensatz (B₀) und den n Bilddatensätzen (B₁ bis Bₙ);
- Erzeugen des Pressblechs (P) aus dem Reliefdatensatz (R);
- Erzeugen von verschiedenen Laminaten (L₀ bis Lₙ) aus den verschiedenen Dekorpapieren (Do bis Dₙ) durch Verpressen des jeweiligen Dekorpapiers mit einer Grundplatte (G) mittels des Pressblechs (P).

3. Verfahren nach Anspruch 1 oder 2, **dadurch gekennzeichnet, dass** es sich bei der Vorlage um ein Holz oder einen Stein handelt.

4. Verfahren nach mindestens einem der vorhergehenden Ansprüche, **dadurch gekennzeichnet, dass** als Bearbeitungsmethode Schleifen, Pore ausbürsten, maschinelles Strukturieren, Sandstrahlen, Beizen, Räuchern, Kälken, Lackieren und/oder Ölen in Frage kommt.

5. Verfahren nach mindestens einem der vorhergehenden Ansprüche, **dadurch gekennzeichnet, dass** die Dekorpapiere (Do bis Dₙ) in verschiedenen Färbungen koloriert werden.

## Claims

1. Method for manufacturing various laminates (L₀ to Lₙ) with a caul plate (P), wherein each laminate comprises a base plate (G) and a decor paper (Dₙ), **characterised by** the following steps:
- scanning a template (V) for generating a first set of image data (B₀) and a set of relief data (R);
- removing n layers (S₁ to Sₙ) of the template (V);
- editing each layer (S₁ to Sₙ) with different processing methods and scanning each differently processed layer for generating n sets of image data (B₁ to Bₙ);
- producing different decor papers (Do to Dₙ) from the first set of image data (B₀) and the n sets of image data (B₁ to Bₙ);
- producing the caul plate (P) from the set of relief data (R);
- producing different laminates (L₀ to Lₙ) from the different decor papers (Do to Dₙ) by pressing of the respective decor paper with a base plate (G) by means of the caul plate (P).

2. Method for manufacturing various laminates (L₀ to Lₙ) with a caul plate (P), wherein each laminate comprises a base plate (G) and a decor paper (Dₙ), **characterised by** the following steps:
- scanning a template (V) for generating a first set of image data (B₀) and a set of relief data (R);
- editing and scanning the template n times with different processing methods for generating n sets of image data (B₁ to Bₙ);
- producing different decor papers (D₀ to Dₙ) from the first set of image data (B₀) and the n sets of image data (B₁ to Bₙ);
- producing the caul plate (P) from the set of relief data (R);
- producing different laminates (L₀ to Lₙ) from the different decor papers (Do to Dₙ) by pressing of the respective decor paper with a base plate (G) by means of the caul plate (P).

3. Method according to claim 1 or 2, **characterised in that** the template is a wood or stone.

4. Method according to at least one of the preceding claims, **characterised in that** the processing method can be grinding, brushing out pore, machine structuring, sandblasting, pickling, smoking, liming, coating and/or oiling.

5. Method according to at least one of the preceding claims, **characterised in that** the decor papers (Do to Dₙ) are coloured in different colourings.

## Revendications

1. Procédé de fabrication de différents stratifiés (L₀ à Lₙ) avec une tôle de presse (P), chaque stratifié comprenant une plaque de base (G) et un papier décoratif (Dₙ), **caractérisé par** les étapes de procédé suivantes :
- analyse par balayage d'un dessin-modèle (V) pour produire un premier jeu de données d'image (B₀) et un jeu de données de relief (R) ;
- enlèvement de n couches (S₁ à Sₙ) du dessin-modèle (V);
- traitement de chaque couche (S₁ à Sₙ) avec différentes méthodes de traitement et analyse par balayage de chaque couche différemment traitée pour produire n jeux de données d'image (B₁ à Bₙ) ;
- production de différents papiers décoratifs (D₀ à Dₙ) à partir du premier jeu de données d'image (B₀) et des n jeux de données d'image (B₁ à Bₙ);
- production de la tôle de presse (P) à partir du jeu de données de relief (R);
- production de différents stratifiés (L₀ à Lₙ) à partir des différents papiers décoratifs (Do à Dₙ) en pressant le papier décoratif respectif avec une plaque de base (G) au moyen de la tôle de presse (P).

2. Procédé de fabrication de différents stratifiés (L₀ à Lₙ) avec une tôle de presse (P), chaque stratifié comprenant une plaque de base (G) et un papier décoratif (Dₙ), **caractérisé par** les étapes de procédé suivantes :
- analyse par balayage d'un dessin-modèle (V) pour produire un premier jeu de données d'image (B₀) et un jeu de données de relief (R) ;
- répétition n fois des traitements et analyses par balayage du dessin-modèle avec des méthodes de traitement à chaque fois différentes pour produire n jeux de données d'image (B₁ à Bₙ) ;
- production de différents papiers décoratifs (D₀ à Dₙ) à partir du premier jeu de données d'image (B₀) et des n jeux de données d'image (B₁ à Bₙ) ;
- production de la tôle de presse (P) à partir du jeu de données de relief (R) ;
- production de différents stratifiés (L₀ à Lₙ) à partir des différents papiers décoratifs (Do à Dₙ) en pressant le papier décoratif respectif avec une plaque de base (G) au moyen de la tôle de presse (P).

3. Procédé selon la revendication 1 ou 2, **caractérisé en ce que** le dessin-modèle est un bois ou une pierre.

4. Procédé selon au moins l'une des revendications précédentes, **caractérisé en ce que** l'on envisage comme méthode de traitement : poncer, brosser les pores, donner mécaniquement une structure, sabler, décaper, fumer, chauler, laquer et/ou huiler.

5. Procédé selon au moins l'une des revendications précédentes, **caractérisé en ce que** les papiers décoratifs (D₀ à Dₙ) sont colorés en différentes couleurs.
